(19) Europäisches Patentamt
European Patent Office
Office européen des brevets

(11) EP 3 558 512 B1

(12) **FASCICULE DE BREVET EUROPEEN**

(45) Date de publication et mention de la délivrance du brevet:
**21.07.2021 Bulletin 2021/29**

(21) Numéro de dépôt: **17816896.9**

(22) Date de dépôt: **20.12.2017**

(51) Int Cl.:
***B01J 19/18*** *(2006.01)* ***C08F 36/06*** *(2006.01)*
***C08F 136/06*** *(2006.01)* ***C08C 19/22*** *(2006.01)*
***C08C 19/44*** *(2006.01)* ***C08F 236/10*** *(2006.01)*

(86) Numéro de dépôt international:
**PCT/EP2017/083894**

(87) Numéro de publication internationale:
**WO 2018/115165 (28.06.2018 Gazette 2018/26)**

(54) **PROCÉDÉ DE SYNTHÈSE EN CONTINU D'ÉLASTOMÈRE DIÉNIQUE AVEC INITIATEUR AMIDURE DE LITHIUM**

VERFAHREN ZUR KONTINUIERLICHEN SYNTHESE EINES DIENELASTOMERS MIT EINEM LITHIUMAMIDINITIATOR

METHOD FOR THE CONTINUOUS SYNTHESIS OF A DIENE ELASTOMER WITH LITHIUM AMIDE INITIATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663002**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
- **DIRE, Charlotte**
  **63040 Clermont-Ferrand Cedex 09 (FR)**
- **DESSENDIER, Marie-Hélène**
  **63040 Clermont-Ferrand Cedex 09 (FR)**

(74) Mandataire: **Le Cam, Véronique Marie Christine**
**Manufacture Française des Pneumatiques Michelin**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**EP-A1- 1 829 906** **WO-A1-2011/157742**
**WO-A1-2013/139378** **WO-A1-2014/040640**
**WO-A1-2015/018599**

- **DATABASE WPI Week 200980 Thomson Scientific, London, GB; AN 2009-Q99504 XP002772828, & JP 2009 263587 A (BRIDGESTONE CORP) 12 novembre 2009 (2009-11-12)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 558 512 B1

## Description

La présente invention se rapporte à un procédé de synthèse en continu, au moyen de plusieurs réacteurs en série, d'un élastomère diénique, permettant d'obtenir un taux élevé de polymère vivant, dans le cas d'une initiation avec un amidure de lithium.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en œuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

La réduction de l'hystérèse des mélanges est un objectif permanent de l'industrie du pneumatique afin de limiter la consommation de carburant et de préserver ainsi l'environnement.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante. On peut également citer l'utilisation d'un amorceur fonctionnel possédant un groupement fonctionnel interactif avec la charge.

A titre d'illustration de cet art antérieur, on peut mentionner l'utilisation d'élastomères diéniques fonctionnalisés par des composés alcoxysilanes et des composés aminés.

On peut citer le brevet JP4655706B2 qui propose de combiner la fonctionnalisation du bout de chaîne vivant avec un composé du type alcoxysilane porteur d'une fonction amine à l'amorçage avec un alkyllithium fonctionnel amine dans le but de minimiser l'hystérèse. De la même façon, dans la demande de brevet US20120245275A1, il est proposé de combiner la fonctionnalisation du bout de chaîne vivant avec un composé du type alcoxysilane porteur d'une fonction amine à l'amorçage avec un amidure de lithium mais également avec un monomère fonctionnel du type vinylaminosilane. Enfin, dans les demandes de brevets WO2015063161A1, WO2015044225A1, WO2015018772A1 et WO2015018600A1, il est proposé de combiner l'amorçage avec un amidure de lithium avec la réaction du bout de chaîne vivant avec des composés du type alcoxysilane porteurs de différents groupements possédant une affinité envers la silice.

Comme illustré ci-dessus, l'utilisation d'amorceurs fonctionnels possédant un groupement interactif envers la silice tels que les alkyllithium fonctionnels amine ou les amidures de lithium présente un intérêt pour diminuer la résistance au roulement en diminuant la dissipation d'énergie liée aux bouts de chaîne libres. Il semble donc intéressant de pouvoir les utiliser à l'échelle industrielle dans des procédés de synthèse d'élastomères compétitifs.

Il est connu de l'homme de l'art que les procédés de synthèse en continu sont plus compétitifs que les procédés de synthèse en discontinus pour lesquels des arrêts et redémarrages fréquents sont nécessaires. Alors que l'utilisation d'amorceur du type amidure de lithium conduit à l'obtention conjointe de conversions en monomères élevées (supérieures à 85%) et de taux de chaînes polymères vivantes sous forme $C^{-}Li^{+}$ élevés en procédé discontinu (supérieurs ou égaux à 90%), une conversion élevée en monomères (supérieure à 85%) est associée à un faible taux de chaînes polymère vivantes (inférieur à 60%) et un taux élevé de chaînes polymère vivantes (supérieur ou égal à 90%) est associé à une faible conversion en monomères (inférieure à 70%) dans le cas d'un procédé continu classique à un réacteur.

Le but de l'invention est donc d'identifier un procédé de synthèse en continu permettant l'obtention conjointe d'une conversion élevée en monomères (supérieure à 70% en masse) et d'un taux de chaînes polymères vivantes élevé (supérieur ou égal à 90% en nombre) à l'issue de l'étape de polymérisation dans le cas d'une initiation avec un amidure de lithium. Un taux de polymère vivant élevé à l'issue de l'étape de polymérisation est souhaitable afin de pouvoir fonctionnaliser, coupler ou étoiler à souhait les chaînes polymères.

Les inventeurs ont maintenant découvert de façon surprenante que les buts de l'invention pouvaient être obtenus par un procédé de synthèse en continu comprenant plusieurs réacteurs en série, la conversion massique dans le premier réacteur étant inférieure à 70%, la polymérisation étant poursuivie de telle façon que la conversion massique totale à la sortie du dernier réacteur soit supérieure à 70%.

L'invention a donc pour objet un procédé de synthèse en continu d'un élastomère diénique au moyen de n réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation anionique choisi parmi les amidures de lithium et un agent polaire, la conversion massique C1 dans le premier réacteur étant inférieure à 70%, un ou plusieurs des réacteurs r2 à rn étant éventuellement en outre alimenté(s) par réinjection d'une solution, de préférence purifiée, comprenant du solvant et/ou des monomères et/ou de l'agent polaire,
la conversion massique C1 dans le premier réacteur étant inférieure à 70%,

où

$$C1=P1/M1$$

où P1 est la masse de polymère formé à la sortie du réacteur r1,
où M1 est la quantité massique de monomère(s) introduit(s) dans le réacteur r1,

la conversion massique totale Cn à la sortie du réacteur rn étant supérieure ou égale à 70%,
où

$$Cn = \frac{Pn}{\sum_1^n Mi}$$

où Pn est la masse de polymère formé à la sortie du réacteur rn,
où Mi est la quantité massique de monomère(s) introduit(s) dans le réacteur ri, i variant de 1 à n.

Dans le cadre de la présente demande, on appelle réinjection éventuelle le fait de répéter l'action d'injection dans un réacteur ri', différent du réacteur r1, déjà alimenté par le flux issu de ri'-1. La réinjection peut être faite directement dans un ou plusieurs des réacteurs, ou, avantageusement, par mélangeage au flux issu de ri'-1. La réinjection peut être faite avec des flux de composition identique ou différente du flux d'alimentation de r1. Quand la réinjection a lieu dans au moins deux réacteurs, les natures de ces réinjections peuvent être identiques ou différentes. On appelle monomère réinjecté, le monomère injecté dans ri' non issu du flux provenant de ri'-1.

Ainsi, par quantité massique Mi de monomère(s) introduit(s) dans le réacteur ri, on entend, lorsque i=1, la quantité de monomère(s) contenu(s) dans la solution d'entrée et introduit(s) à ce titre dans le réacteur 1, et lorsque i= 2 à n, la quantité de monomère(s) éventuellement réinjecté(s) dans le réacteur i.

Le contrôle de la conversion dans tous les réacteurs, en particulier dans le premier et le dernier réacteur, est assuré par la température, le temps de séjour, la quantité d'agent polaire et la quantité de monomère entrant dans ces réacteurs, la concentration en polymère vivant. L'homme du métier sait faire varier ces différents paramètres pour contrôler les conversions dans les différents réacteurs.

La température de chaque réacteur varie avantageusement de 20 à 150°C.

Le procédé selon l'invention permet d'obtenir en sortie du dernier réacteur un taux de chaînes vivantes supérieur ou égal à 90% en nombre par rapport au nombre total de chaînes vivantes initiées dans le réacteur r1. Toutefois, lorsqu'une solution est réinjectée comme expliqué précédemment, cette solution est avantageusement purifiée pour ne pas dégrader le polymère vivant.

Dans le cas d'une polymérisation anionique, la chaîne vivante est un carbanion. Le carbanion est une espèce très réactive. Il réagit avec des espèces protiques ou des espèces électrophiles.

Aussi si la charge du premier réacteur contient des impuretés protiques (alcools, eau, acides ...) ou électrophiles (carbonyles, ...), l'initiateur réagira d'abord avec ces impuretés pour conduire à des espèces inactives (alcoolates, ...) incapables d'initier la polymérisation des monomères. La différence entre la quantité d'initiateur introduit en entrée du réacteur r1 et la quantité d'initiateur ayant réagi avec les impuretés dans le réacteur r1 constitue la quantité d'initiateur actif. Le nombre de chaînes vivantes initiées dans le réacteur r1 est équivalent à cette quantité d'initiateur actif dans le réacteur r1.

De préférence, le nombre de réacteurs est égal à 2 ou 3, de préférence 2.

De préférence, la conversion massique C1 dans le réacteur r1 est inférieure à 65%, de préférence inférieure à 60%.

De préférence, la conversion massique totale Cn à la sortie du réacteur rn est supérieure ou égale à 80%, de préférence encore supérieure ou égale à 85%.

De préférence, le temps de séjour dans le réacteur ri, i variant de 1 à n, est compris entre 1 et 60 minutes, de préférence entre 5 et 60 minutes, de préférence encore entre 10 et 50 minutes. Il est calculé de la manière suivante :

$$\tau_i = \frac{V_i}{Q_{Vi}}$$

Avec :

- Vi, volume du réacteur Ri, i variant de 1 à n
- $Q_{Vi}$ = débit volumique sortant du réacteur i.

Comme expliqué précédemment, selon un mode particulier, un ou plusieurs des réacteurs r2 à rn est en outre alimenté(s) par réinjection d'une solution, de préférence purifiée, comprenant du solvant et/ou des monomères et/ou de l'agent polaire.

Le carbanion polymère étant une espèce très réactive comme expliqué précédemment, la neutralisation des impuretés apportées par la réinjection se fera par le carbanion polymère. Cette neutralisation empêche la chaîne de polymère de continuer à se propager car la chaîne devient inactive envers la polymérisation mais également envers la fonctionnalisation. Cette espèce n'est donc plus réactive avec les agents de stoppage, fonctionnalisation, couplage ou étoilage éventuels.

C'est pourquoi, en dehors de la charge du premier réacteur, il peut être nécessaire de contrôler la pureté de chaque solution éventuellement réinjectée afin de contribuer à un taux de polymère mort en sortie du réacteur rn le plus faible possible, soit inférieur à 10% en nombre, par rapport au nombre total de chaînes initiées dans le réacteur r1.

Par pureté d'une solution réinjectée, on entend la proportion massique de monomère(s) éventuel, et de solvant éventuel et d'agent polaire éventuel, par rapport à la masse totale de la solution réinjectée.

L'étape de purification consiste à éliminer dans la solution réinjectée les composés protiques (eau, alcool, acides, ...) et électrophiles (carbonyle, ...) pouvant désactiver le bout de chaîne vivant de façon à diminuer leur quantité dans cette solution réinjectée à une teneur inférieure ou égale à 5 mol.% de l'initiateur actif, de préférence inférieure ou égale à 2 mol.% de l'initiateur actif. Par initiateur actif, on entend la quantité de produit de type amidure de lithium de départ utilisé comme initiateur et non pour neutraliser les impuretés.

Chaque solution réinjectée contient du solvant purifié si nécessaire et/ou des monomères purifiés si nécessaire et/ou de l'agent polaire purifié si nécessaire.

Le constituant ou chaque constituant de la ou des solutions réinjectées peut être, avant réinjection, purifié indépendamment par tout moyen de purification habituellement utilisé pour purifier les constituants, par exemple par adsorption, extraction liquide/liquide, extraction gaz/liquide ou distillation.

De façon alternative, la solution à réinjecter, comprenant tout ou partie de l'ensemble de ses constituants, peut être, avant réinjection, purifiée par tout moyen de purification habituellement utilisé pour purifier les constituants, par exemple par adsorption, extraction liquide/liquide, extraction gaz/liquide ou distillation.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs monomères vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de monomères vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique est préparé par polymérisation anionique en présence d'un initiateur de polymérisation amidure de lithium compris dans la solution d'entrée.

Les amidures de lithium sont les produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpipérazine, 1-benzylpiperazine, pipéridine, 3,3-diméthylpipéridine, 2,6-diméthylpipéridine, 1-méthyl-4-(méthylamino)pipéridine, 2,2,6,6-tetraméthylpipéridine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine.

L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

La polymérisation est effectuée en présence d'un solvant compris dans la solution d'entrée.

Le solvant utilisé dans le procédé selon l'invention est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Comme expliqué précédemment, la solution d'entrée, ainsi qu'éventuellement l'une ou plusieurs des solutions réinjectées, utilisée(s) dans le procédé selon l'invention comprend/comprennent un agent polaire.

À titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

Selon un premier mode de réalisation particulier, le flux en sortie du réacteur n et contenant les chaînes vivantes est mis en contact avec un ou plusieurs agents de stoppage de la polymérisation comme connu en soi, injecté(s) dans le procédé de manière continue.

Dans ce premier mode de réalisation, l'élastomère diénique vivant compris dans le flux en sortie du réacteur n peut, préalablement au stoppage, être mis à réagir avec un ou plusieurs agents de fonctionnalisation, de couplage ou d'étoilage. La particularité de ces agents de fonctionnalisation, de couplage ou d'étoilage est qu'ils peuvent soit modifier l'élastomère de manière à améliorer l'interaction avec une charge renforçante (c'est le cas d'agents de fonctionnalisation, de couplage et de certains agents d'étoilage) soit conférer au polymère une structure donnée (c'est le cas de certains agents d'étoilage et de couplage).

Selon un second mode de réalisation particulier, l'élastomère diénique vivant compris dans le flux en sortie du réacteur n est mis à réagir avec un ou plusieurs agents de fonctionnalisation, de couplage ou d'étoilage agissant également comme agent de stoppage de la polymérisation. Il n'est alors pas nécessaire d'ajouter un agent de stoppage classique connu en soi pour mettre fin à la polymérisation.

Quel que soit le mode de réalisation, comme agent de fonctionnalisation, de couplage ou d'étoilage on peut envisager tout agent connu en soi.

Le temps de séjour dans chaque réacteur tubulaire, ou tubulaire à dispersion axiale est de préférence compris entre 0 et 120 minutes, notamment entre 0,1 et 60 minutes, plus préférentiellement entre 0,1 et 5 minutes.

Les caractéristiques précitées de la présente invention, ainsi que d'autres, seront mieux comprises à la lecture de la description suivante de plusieurs exemples de réalisation de l'invention, donnés à titre illustratif et non limitatif.

<u>Mesures et tests utilisés</u>

<u>Conversion</u>

Les conversions sont mesurées par pesées d'extrait sec de la solution contenant le polymère. Dans cette méthode, de la solution contenant le polymère est prélevée à la sortie du réacteur. Cette solution est introduite dans une barquette préalablement tarée. La masse de solution est ainsi pesée.

L'échantillon est séché à 140°C, sous la pression réduite de 200 mmHg pendant 15 minutes. La barquette est ensuite placée dans un dessiccateur contenant du gel de silice pendant 2 minutes. La pesée de la barquette permet alors de déterminer la masse de polymère de l'échantillon prélevé. On remonte alors via la concentration en monomères à la conversion à la sortie du réacteur.

$$C = \frac{\dfrac{m_{extrait\ sec}}{m_{échantillon}}}{\dfrac{\sum_1^n Mi}{\sum_1^n Qi}} . 100$$

avec

$$\sum_1^n Mi$$

qui représente la somme de toutes les entrées massiques en monomères dans le procédé total (réacteurs 1 à n) et

$$\sum_1^n Qi$$

qui représente la somme de toutes les entrées massiques dans le procédé total (réacteurs 1 à n). *(Solvant, monomères, catalyseurs etc...),*

le rapport $\frac{\sum_1^n Mi}{\sum_1^n Qi}$ correspondant au % massique en monomères

Température de transition vitreuse

Dans ces exemples, les températures de transition vitreuse (Tg) des élastomères sont déterminées à l'aide d'un calorimètre différentiel ("differential scanning calorimeter").

Microstructure des élastomères

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Masse molaire moyenne en nombre et indice de polymolécularité

La masse molaire moyenne en nombre et l'indice de polymolécularité du polymère sont déterminés à l'aide d'une SEC (chromatographie d'exclusion stérique).

La technique SEC (« Size Exclusion Chromatography ») permet de séparer les macromolécules en solution suivant leur taille à travers des colonnes remplies d'un gel poreux. Les macromolécules sont séparées suivant leur volume hydrodynamique, les plus volumineuses étant éluées en premier.

La SEC permet d'appréhender les masses molaires moyennes et les distributions des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 28% massique de motifs type styrène, 18% massique de motifs type 1-2, 31% massique de motifs type 1-4 trans et 23% massique de motifs type 1-4 cis.

Taux de chaînes vivantes dans l'élastomère en sortie des réacteurs

Dans les exemples, la solution de polymère vivante en sortie des réacteurs de polymérisation est mise en contact de manière continue avec l'agent de fonctionnalisation DEAB (diéthylaminobenzophénone) en excès avec un temps de contact suffisant à la réaction totale de toutes les chaînes vivantes avec l'agent de fonctionnalisation. La détermination du taux de DEAB greffée (taux de fonction dans les exemples) est réalisée par une analyse RMN. Cette détermination est réalisée par rapport à la quantité d'élastomère. De cette manière les résultats obtenus peuvent être exprimés en % molaire, en mmol/kg d'élastomère ou en pce (pour cent grammes d'élastomère)

Les échantillons (environ 25mg d'élastomère) sont solubilisés dans le Disulfure de Carbone ($CS_2$) dans environ 1mL. 100μL de cyclohexane deutéré sont ajoutés pour le signal de Lock.

Les spectres sont acquis sur un spectromètre Avance 500 MHz Bruker équipé d'une sonde " large bande " BBI z-grad 5 mm Bruker.

L'expérience RMN $^1H$ quantitative utilise une séquence simple impulsion 30° et un délai de répétition de 5 secondes entre chaque acquisition. 256 accumulations sont réalisées à température ambiante.

Les signaux RMN $^1H$ des 8 protons quantifiés (protons liés aux carbones identifiés 1 à 4 sur la figure 1) de la DEAB greffées correspondent à un massif au déplacement chimique de 3.2 ppm.

Le spectre de corrélation RMN 2D $^1H/^{13}C$ $^1J$ HSQC édité permet de vérifier la nature du motif greffé grâce aux déplacements chimiques des atomes de carbone et de protons. Le signal des carbones 1 à 4 a un déplacement chimique à 44.4 ppm.

Le spectre RMN $^1H$ permet de quantifier les motifs DEAB greffés par intégration des massifs de signaux décrits ci-dessus : H1, H2 pour la forme DEAB déshydratée et H3, H4 pour la forme DEAB carbinol.

La diéthylaminobenzophénone greffée, formes déshydratée et carbinol, est de formule suivante :

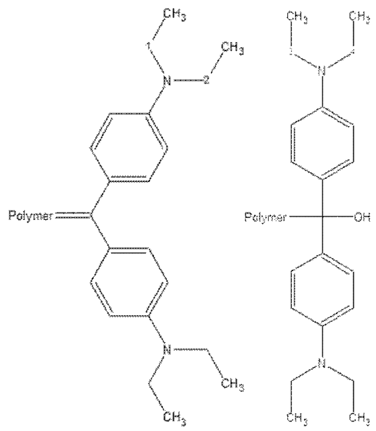

Figure 1

Les déplacements chimiques sont calibrés par rapport à l'impureté protonée du Disulfure de Carbone δ ppm $^1H$ à 7.18 ppm référencé sur le TMS (δppm $^1H$ à 0 ppm) et δppm $^{13}C$ à 192 ppm référencé sur le TMS (δppm $^{13}C$ à 0 ppm).

Le spectre RMN 1D $^1H$ simple impulsion permet de quantifier les motifs du polymère par intégration des massifs de signaux caractéristiques. Par exemple pour un SBR (Styrène butadiène rubber), les massifs considérés pour le calcul sont 5H (protons) styrène entre 7.4ppm et 6.0ppm, 2H PB (polybutadiène) 1-4 + $^1H$ PB1-2 entre 5.8 ppm et 4.9ppm et 2H PB1-2 entre 4.9 ppm et 4.3 ppm.

Ainsi, connaissant la quantité totale de chaînes par la valeur de Mn obtenue analyse SEC, il est possible de déterminer le taux de chaînes vivantes correspondant au taux de chaînes fonctionnalisées DEAB.

Taux de chaînes initiées hexaméthylèneimine (HMN)

La détermination du taux de chaînes initiées hexaméthylèneimine (HMN) est réalisée par analyse RMN.

Les échantillons (environ 200 mg) sont solubilisés dans environ 1 mL de disulfure de carbone ($CS_2$). 100 μL de cyclohexane deutéré sont ajoutés à la solution pour le lock du spectromètre.

Les spectres sont acquis sur un spectromètre Avance 500 MHz BRUKER équipé d'une cryosonde « large bande » BBIz-grad 5 mm.

L'expérience RMN $^1H$ quantitative utilise une séquence simple impulsion 30° et un délai de répétition de 5 secondes entre chaque acquisition. 64 à 1024 accumulations sont réalisées. Des expériences bidimensionnelles $^1H/^{13}C$ ont été réalisées pour déterminer la structure des polymères fonctionnels. Les déplacements chimiques proton sont calibrés par rapport à l'impureté protonnée du $CS_2$ à 7,18 ppm.

Dans le cas d'un homopolymère de butadiène, soit un polybutadiène, la mesure RMN 1D $^1$H simple impulsion quantitative permet d'observer deux massifs (2,8 ppm à 3,0 ppm et 2,3 ppm à 2,5 ppm) correspondant respectivement aux protons 1 et 2.

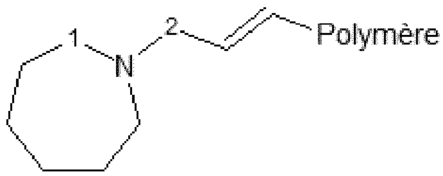

L'intégration des protons 2 permet d'estimer la quantité de motifs HMN greffés sur un butadiène 1,4 et l'intégration des protons 1 permet d'estimer la quantité totale de motifs HMN greffés sur les chaînes polybutadiène.

Dans le cas d'un copolymère de butadiène et de styrène, la mesure RMN 1D $^1$H simple impulsion quantitative permet d'observer un seul massif (2,8 ppm à 3,0 ppm) correspondant aux protons 2. L'intégration des protons 2 permet d'estimer la quantité de motifs HMN greffés sur un butadiène 1,4 uniquement. Le signal des protons 1 est masqué par le signal aliphatique de la matrice SBR. Dans le cas d'un SBR, seule la quantité de motifs HMN greffés à un butadiène 1,4 peut donc être estimée.

Ainsi, connaissant la quantité totale de chaînes par la valeur de Mn obtenue par analyse SEC, il est possible de déterminer le taux de chaîne initiées HMN (seuls les motifs HMN liés à une unité butadiène 1,4 sont quantifiables dans le cas de copolymères de butadiène et de styrène).

Exemples de préparation d'élastomères

Dans une installation pilote de polymérisation continue contenant un ou plusieurs réacteurs continus agités, supposés parfaitement agités selon l'homme l'art, sont introduits en continu du méthylcyclohexane, du butadiène, du styrène et du tétrahydrofurfuryl éthyle éther selon les proportions décrites dans chaque exemple. Du n-butyllithium est introduit en quantité suffisante afin de neutraliser les impuretés protiques apportées par les différents constituants présents dans l'entrée de ligne puis de l'hexaméthyleneimine lithiée est introduit afin d'initier les chaînes polymère. La synthèse de l'héxaméthylèneimine lithiée est réalisée in situ en continu par réaction d'un équivalent d'hexaméthylèneimine et 1,02 équivalent de butyl lithium dans un réacteur parfaitement agité.

Les temps de séjour et les concentrations indiqués en exemple sont calculés à partir des débits des différents constituants entrant dans le procédé de polymérisation.

**Exemple A** - Comparatif - Procédé continu à 1 réacteur

Une synthèse de polymère butadiène/styrène est effectuée selon un procédé comparatif utilisant 1 seul réacteur agité, supposé parfaitement agité.

Les conditions opératoires sont précisées dans le tableau 1.

Tableau 1

| Conditions opératoires | Valeur | Unité | Réacteur |
|---|---|---|---|
| Nombre réacteurs | 1 | - | - |
| Volume des réacteurs | 14 | L | 1 |
| %Styrène (1) | 33 | % | 1 |
| %massique monomères (2) | 12 | % | 1 |
| Agent polaire (tétrahydrofurfuryl éthyle éther) | $3{,}51.10^{-4}$ | Mol/L | 1 |
| Initiateur actif (hexaméthylèneimine lithiée) | $6{,}45.10^{-4}$ | Mol/L | 1 |
| Temps de séjour | 30 | Min | 1 |
| Température | 90 | °C | 1 |

(suite)

| Conditions opératoires | Valeur | Unité | Réacteur |
|---|---|---|---|
| Conversion massique (3) | 87 | % | 1 |
| (1) en poids par rapport à la somme de toutes les entrées massiques en monomères du procédé<br>(2) en poids par rapport à la somme de toutes les entrées massiques du procédé<br>(3) conversion massique en monomères dans le réacteur | | | |

Les caractéristiques du polymère obtenu en sortie du réacteur sont données dans le tableau 2.

Tableau 2

| | | |
|---|---|---|
| Taux vinyl (4) | 25,5 | % |
| Taux styrène (5) | 28 | % |
| Tg | -45 | °C |
| Ip | 2,0 | - |
| Mn | 123,2 | kg/mo l |
| Quantité de fonctions HMN | 6,1 | mmol/kg |
| Taux chaînes initiées HMN (6) | 76 | % |
| Quantité de fonctions DEAB | 4,2 | mmol/kg |
| Taux polymère vivant (7) | 51 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec la DEAB.<br>(7) rapport molaire entre la quantité de fonctions DEAB déterminée par RMN et le nombre de bouts de chaîne calculé à partir de la valeur de Mn mesurée sur l'élastomère récupéré à l'issue de l'étape de fonctionnalisation avec la DEAB. | | |

**Exemple B** - Selon l'invention - Procédé continu à 2 réacteurs en série avec conversion de 50 % dans le premier réacteur

Une synthèse de polymère styrène/butadiène est effectuée selon un procédé selon l'invention utilisant 2 réacteurs agités, supposés parfaitement agités en série.

Les conditions opératoires sont précisées dans le tableau 3.

Tableau 3

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 38 | % | 1 |
| %massique monomères (2) | 12 | % | 1 |
| Agent polaire (tétrahydrofurfuryl éthyle éther) | $8,8.10^{-5}$ | Mol/L | - |
| Initiateur actif (hexaméthylèneimine lithiée) | $5,43.10^{-4}$ | Mol/L | 1 |
| Temps de séjour | 30 | Min | 1 |
| | 30 | Min | 2 |
| Température | 55 | °C | 1 |
| | 75 | | 2 |

(suite)

| Conditions opératoires | Valeur | Unité | Réacteur |
|---|---|---|---|
| Conversion massique (3) | 46 | % | 1 |
| | 89 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 4.

Tableau 4

| | | |
|---|---|---|
| Taux vinyl (4) | 25 | % |
| Taux styrène (5) | 28 | % |
| Tg | -45 | °C |
| Mn | 149,7 | kg/mo l |
| IP | 1,6 | - |
| Quantité fonctions HMN | 4,9 | mmol/kg |
| Taux chaînes initiées HMN (6) | 74 | % |
| Quantité fonctions DEAB | 6,4 | mmol/kg |
| Taux polymère vivant (7) | 96 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec la DEAB.<br>(7) rapport molaire entre la quantité de fonctions DEAB déterminée par RMN et le nombre de bouts de chaîne calculé à partir de la valeur de Mn mesurée sur l'élastomère récupéré à l'issue de l'étape de fonctionnalisation avec la DEAB. | | |

Ainsi, cet exemple montre qu'il est possible d'obtenir concomitamment avec le procédé continu selon l'invention une conversion élevée et un taux de polymère vivant élevé.

**Exemple C** - Comparatif - Procédé continu à 2 réacteurs en série avec une conversion de 75% dans le premier réacteur

Une synthèse de polymère styrène/butadiène est effectuée selon un procédé selon l'invention utilisant 2 réacteurs agités, supposés parfaitement agités en série.

Les conditions opératoires sont précisées dans le tableau 5.

Tableau 5

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 30 | % | 1 |
| %massique monomères (2) | 12 | % | 1 |
| Agent polaire (tétrahydrofurfuryl éthyle éther) | $1,9.10^{-4}$ | Mol/L | - |
| Initiateur actif (hexaméthylèneimine lithiée) | $6,01.10^{-4}$ | Mol/L | 1 |

(suite)

| Conditions opératoires | Valeur | Unité | Réacteur |
|---|---|---|---|
| Temps de séjour | 30 | Min | 1 |
| | 30 | Min | 2 |
| Température | 75 | °C | 1 |
| | 90 | °C | 2 |
| Conversion massique (3) | 75 | % | 1 |
| | 96 | % | 2 |
| (1) en poids par rapport à la somme de toutes les entrées massiques en monomères du procédé<br>(2) en poids par rapport à la somme de toutes les entrées massiques du procédé<br>(3) conversion massique en monomère en sortie du réacteur | | | |

Les caractéristiques du polymère obtenu en sortie du réacteur 2 sont données dans le tableau 6.

Tableau 6

| | | |
|---|---|---|
| Taux vinyl (4) | 25,5 | % |
| Taux styrène (5) | 28 | % |
| Tg | -45 | °C |
| Mn | 146,0 | kg/mo l |
| IP | 1,8 | - |
| Quantité fonctions HMN | 5,2 | mmol/kg |
| Taux chaînes initiées HMN (6) | 76 | % |
| Quantité fonctions DEAB | 4,0 | mmol/kg |
| Taux polymère vivant (7) | 59 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec la DEAB.<br>(7) rapport molaire entre la quantité de fonctions DEAB déterminée par RMN et le nombre de bouts de chaîne calculé à partir de la valeur de Mn mesurée sur l'élastomère récupéré à l'issue de l'étape de fonctionnalisation avec la DEAB. | | |

Ainsi, cet exemple comparatif montre que si la conversion en monomères est trop élevée dans le réacteur 1 alors le taux de polymère vivant est inférieur à 90 % à la sortie du réacteur 2.

**Exemple D** - Selon l'invention - Procédé continu à 2 réacteurs en série avec conversion de 60% dans le premier réacteur

Une synthèse de polymère styrène/butadiène est effectuée selon un procédé selon l'invention utilisant 2 réacteurs agités, supposés parfaitement agités en série.

Les conditions opératoires sont précisées dans le tableau 7.

Tableau 7

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 33 | % | 1 |

(suite)

| Conditions opératoires | Valeur | Unité | Réacteur |
|---|---|---|---|
| %massique monomères (2) | 12 | % | 1 |
| Agent polaire (tétrahydrofurfuryl éthyle éther) | $1,2.10^{-4}$ | Mol/L | - |
| Initiateur actif (hexaméthylèn eimine lithiée) | $5,6.10^{-4}$ | Mol/L | 1 |
| Temps de séjour | 30 | Min | 1 |
| | 30 | Min | 2 |
| Température | 65 | °C | 1 |
| | 80 | | 2 |
| Conversion massique (3) | 62 | % | 1 |
| | 94 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 8.

Tableau 8

| | | |
|---|---|---|
| Taux vinyl (4) | 25 | % |
| Taux styrène (5) | 28 | % |
| Tg | -46 | °C |
| Mn | 153,4 | kg/mo l |
| IP | 1,7 | - |
| Quantité fonctions HMN | 5,0 | mmol/kg |
| Taux chaînes initiées HMN (6) | 76 | % |
| Quantité fonctions DEAB | 5,9 | mmol/kg |
| Taux polymère vivant (7) | 91 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec la DEAB.<br>(7) rapport molaire entre la quantité de fonctions DEAB déterminée par RMN et le nombre de bouts de chaîne calculé à partir de la valeur de Mn mesurée sur l'élastomère récupéré à l'issue de l'étape de fonctionnalisation avec la DEAB. | | |

Ainsi, cet exemple montre qu'il est possible d'obtenir concomitamment avec le procédé continu selon l'invention une conversion élevée et un taux de polymère vivant élevé.

**Exemple E** - Selon l'invention - Procédé continu à 3 réacteurs en série

Une synthèse de polymère butadiène/styrène est effectuée selon un procédé selon l'invention utilisant 3 réacteurs agités, supposés parfaitement agités en série.

Les conditions opératoires sont précisées dans le tableau 9.

Tableau 9

| Conditions opératoires | Valeur | Unité | Réacteur |
|---|---|---|---|
| Nombre réacteurs | 3 | - | - |

(suite)

| Conditions opératoires | Valeur | Unité | Réacteur |
|---|---|---|---|
| Volume des réacteurs | 14 | L | 1 |
| | 14 | | 2 |
| | 14 | | 3 |
| %Styrène (1) | 28 | % | 1 |
| %massique monomères (2) | 12 | % | 1 |
| Agent | 8,8.$10^{-5}$ | Mol/L | - |
| polaire (tétrahydrofurfuryl éthyle éther) | | | |
| Initiateur actif (hexaméthylèneimine lithiée) | 5,81.$10^{-4}$ | Mol/L | 1 |
| Temps de séjour | 30 | Min | 1 |
| | 30 | Min | 2 |
| | 30 | Min | 3 |
| Température | 50 | °C | 1 |
| | 70 | °C | 2 |
| | 80 | °C | 3 |
| Conversion massique (3) | 40 | % | 1 |
| | 70 | % | 2 |
| | 93 | % | 3 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 3 sont données dans le tableau 10.

Tableau 10

| | | |
|---|---|---|
| Taux vinyl (4) | 25,5 | % |
| Taux styrène (5) | 27,5 | % |
| Tg | -46 | °C |
| Ip | 1,45 | - |
| Mn | 146,2 | kg/mo l |
| Quantité fonctions HMN | 5,3 | mmol/kg |
| Taux chaînes initiées HMN (6) | 77 | % |
| Quantité fonctions DEAB | 6,5 | mmol/kg |
| Taux polymère vivant (7) | 95 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec la DEAB.<br>(7) rapport molaire entre la quantité de fonctions DEAB déterminée par RMN et le nombre de bouts de chaîne calculé à partir de la valeur de Mn mesurée sur l'élastomère récupéré à l'issue de l'étape de fonctionnalisation avec la DEAB. | | |

Ainsi, cet exemple montre qu'il est possible d'obtenir concomitamment avec le procédé continu selon l'invention une conversion élevée et un taux de polymère vivant élevé.

## Revendications

**1.** Procédé de synthèse en continu d'un élastomère diénique au moyen de n réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation anionique choisi parmi les amidures de lithium et un agent polaire, un ou plusieurs des réacteurs r2 à rn étant éventuellement en outre alimenté(s) par réinjection d'une solution, de préférence purifiée, comprenant du solvant et/ou des monomères et/ou de l'agent polaire,
la conversion massique C1 dans le premier réacteur étant inférieure à 70%,
où

$$C1=P1/M1$$

où P1 est la masse de polymère formé à la sortie du réacteur r1,
où M1 est la quantité massique de monomère(s) introduit(s) dans le réacteur r1,
la conversion massique totale Cn à la sortie du réacteur rn étant supérieure ou égale à 70%,

où

$$Cn=\frac{Pn}{\sum_{1}^{n}Mi}$$

où Pn est la masse de polymère formé à la sortie du réacteur rn, et Mi est la quantité massique de monomère(s) introduit(s) dans le réacteur ri, i variant de 1 à n.

**2.** Procédé selon la revendication 1, **caractérisé en ce que** n varie de 2 à 3, de préférence n=2.

**3.** Procédé selon l'une quelconque des revendications précédentes, **caractérisé en ce que** la conversion massique C1 dans le réacteur r1 est inférieure à 65%, de préférence inférieure à 60%.

**4.** Procédé selon l'une quelconque des revendications précédentes, **caractérisé en ce que** la conversion massique totale Cn à la sortie du réacteur rn est supérieure ou égale à 80%, de préférence supérieure ou égale à 85%.

**5.** Procédé selon l'une quelconque des revendications précédentes, **caractérisé en ce que** l'élastomère diénique est un copolymère de butadiène et d'un monomère vinylaromatique, notamment un SBR.

**6.** Procédé selon l'une quelconque des revendications précédentes **caractérisé en ce que** le temps de séjour dans le réacteur ri, i variant de 1 à n, est compris entre 1 et 60 minutes, de préférence entre 5 et 60 minutes, de préférence encore entre 10 et 50 minutes.

**7.** Procédé selon l'une quelconque des revendications précédentes, **caractérisé en ce que** le flux en sortie du réacteur rn et contenant les chaînes vivantes est mis en contact avec un ou plusieurs agents de stoppage de polymérisation injecté(s) de manière continue dans le procédé.

**8.** Procédé selon la revendication 7 **caractérisé en ce que** l'élastomère diénique vivant compris dans le flux en sortie du réacteur n, avant réaction avec l'agent de stoppage, est mis à réagir avec un ou plusieurs agents de fonctionnalisation, de couplage ou d'étoilage.

**9.** Procédé selon l'une quelconque des revendications 1 à 6 **caractérisé en ce que** l'élastomère diénique vivant compris dans le flux en sortie du réacteur n est mis à réagir avec un ou plusieurs agents de fonctionnalisation, de couplage ou d'étoilage.

## Patentansprüche

1. Verfahren zur kontinuierlichen Synthese eines Dienelastomers mit Hilfe von n Reaktoren r1 bis rn, die mit einem internen Rührsystem ausgestattet sind, als perfekt gerührt angenommen werden und in Reihe angeordnet sind, wobei n von 2 bis 15 und vorzugsweise 2 bis 9 variiert, wobei der Reaktor r1 mit einer Eingangslösung, die ein Lösungsmittel, ein oder mehrere Monomere, einen aus Lithiumamiden ausgewählten anionischen Polymerisationsinitiator und ein polares Mittel umfasst, gespeist wird, wobei einer oder mehrere der Reaktoren r2 bis rn gegebenenfalls außerdem durch Wiedereinleiten einer vorzugsweise gereinigten Lösung, die Lösungsmittel und/oder Monomere und/oder polares Mittel umfasst, gespeist wird/werden,
   wobei die Massenumwandlung C1 in dem ersten Reaktor kleiner als 70 % ist,
   wobei C1 = P1/M1,
   wobei P1 die Masse von gebildetem Polymer am Ausgang des Reaktors r1 ist,
   wobei M1 die Massenmenge des bzw. der in den Reaktor r1 eingetragenen Monomere ist,
   wobei die Gesamtmassenumwandlung Cn am Ausgang des Reaktors rn größer oder gleich 70 % ist,
   wobei

$$Cn = \frac{Pn}{\sum_{1}^{n} Mi},$$

   wobei Pn die Masse von gebildetem Polymer am Ausgang des Reaktors rn ist
   und Mi die Massenmenge des bzw. der in den Reaktor ri eingetragenen Monomere ist, wobei i von 1 bis n variiert.

2. Verfahren nach Anspruch 1, **dadurch gekennzeichnet, dass** n von 2 bis 3 variiert, vorzugsweise n = 2.

3. Verfahren nach einem der vorhergehenden Ansprüche, **dadurch gekennzeichnet, dass** die Massenumwandlung C1 im Reaktor r1 kleiner als 65 %, vorzugsweise kleiner als 60 %, ist.

4. Verfahren nach einem der vorhergehenden Ansprüche, **dadurch gekennzeichnet, dass** der Gesamtmassenumsatz Cn am Ausgang des Reaktors rn größer oder gleich 80 %, vorzugsweise größer oder gleich 85 %, ist.

5. Verfahren nach einem der vorhergehenden Ansprüche, **dadurch gekennzeichnet, dass** es sich bei dem Dienelastomer um ein Copolymer von Butadien und einem vinylaromatischen Monomer, insbesondere einen SBR, handelt.

6. Verfahren nach einem der vorhergehenden Ansprüche, **dadurch gekennzeichnet, dass** die Verweilzeit im Reaktor ri, wobei i von 1 bis n variiert, zwischen 1 und 60 Minuten, vorzugsweise zwischen 5 und 60 Minuten, noch weiter bevorzugt zwischen 10 und 50 Minuten, liegt.

7. Verfahren nach einem der vorhergehenden Ansprüche, **dadurch gekennzeichnet, dass** der Ausgangsstrom des Reaktors rn, der die lebenden Ketten enthält, mit einem oder mehreren Polymerisationsstoppmitteln, die kontinuierlich in das Verfahren eingeleitet werden, in Kontakt gebracht wird.

8. Verfahren nach Anspruch 7, **dadurch gekennzeichnet, dass** das lebende Dienelastomer im Ausgangsstrom des Reaktors n vor der Reaktion mit dem Stoppmittel mit einem oder mehreren Funktionalisierungs-, Kopplungs- oder Sternverzweigungsmitteln umgesetzt wird.

9. Verfahren nach einem der Ansprüche 1 bis 6, **dadurch gekennzeichnet, dass** das lebende Dienelastomer im Ausgangsstrom des Reaktors n mit einem oder mehreren Funktionalisierungs-, Kupplungs- oder Sternverzweigungsmitteln umgesetzt wird.

## Claims

1. Process for the continuous synthesis of a diene elastomer by means of n reactors r1 to rn which are equipped with an internal stirring system, which are assumed perfectly stirred and which are arranged in series, n varying from 2 to 15, preferably from 2 to 9, the reactor r1 being fed by an input solution comprising a solvent, one or more monomer(s), an anionic polymerization initiator chosen from lithium amides and a polar agent, one or more of the

reactors r2 to rn additionally being optionally fed by reinjection of a preferably purified solution comprising solvent and/or monomers and/or polar agent,
the conversion by weight $C_1$ in the first reactor being less than 70%,
where $C_1 = P_1/W_1$
where $P_1$ is the weight of polymer formed at the outlet of the reactor r1,
where $W_1$ is the amount by weight of monomer(s) introduced into the reactor r1,
the total conversion by weight $C_n$ at the outlet of the reactor rn being greater than or equal to 70%,
where:

$$C_n = \frac{P_n}{\sum_1^n W_i}$$

where $P_n$ is the weight of polymer formed at the outlet of the reactor rn,
and Wi is the amount by weight of monomer(s) introduced into the reactor ri, i varying from 1 to n.

**2.** Process according to Claim 1, **characterized in that** n varies from 2 to 3, preferably n = 2.

**3.** Process according to either one of the preceding claims, **characterized in that** the conversion by weight $C_1$ in the reactor r1 is less than 65%, preferably less than 60%.

**4.** Process according to any one of the preceding claims, **characterized in that** the total conversion by weight $C_n$ at the outlet of the reactor rn is greater than or equal to 80%, preferably greater than or equal to 85%.

**5.** Process according to any one of the preceding claims, **characterized in that** the diene elastomer is a copolymer of butadiene and of vinylaromatic monomer, in particular an SBR.

**6.** Process according to any one of the preceding claims, **characterized in that** the residence time in the reactor ri, i varying from 1 to n, is between 1 and 60 minutes, preferably between 5 and 60 minutes, more preferably between 10 and 50 minutes.

**7.** Process according to any one of the preceding claims, **characterized in that** the output stream from the reactor rn containing the living chains is brought into contact with one or more agents for stopping polymerization continuously injected into the process.

**8.** Process according to Claim 7, **characterized in that** the living diene elastomer included in the output stream from the reactor n, before reaction with the stopping agent, is reacted with one or more functionalization, coupling or star-branching agents.

**9.** Process according to any one of Claims 1 to 6, **characterized in that** the living diene elastomer included in the output stream from the reactor n is reacted with one or more functionalization, coupling or star-branching agents.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 4655706 B
- US 20120245275 A1
- WO 2015063161 A1
- WO 2015044225 A1
- WO 2015018772 A1
- WO 2015018600 A1


### Littérature non-brevet citée dans la description


- **VILMIN, F. ; DUSSAP, C. ; COSTE, N.** *Applied Spectroscopy,* 2006, vol. 60, 619-29